# EUROPEAN PATENT SPECIFICATION

(11) **EP 4 476 667 B1**
(45) Date of publication and mention of the grant of the patent: **03.12.2025**
(21) Application number: 23703225.5
(22) Date of filing: 07.02.2023
(51) Int. Cl.: G06Q 10/06

(54) **MANAGEMENT SYSTEMS FOR EVALUATION AND AUTOMATED CONTROL OF WORKFLOWS INVOLVING HEAVY-DUTY VEHICLES**
VERWALTUNGSSYSTEM ZUR BEWERTUNG UND AUTOMATISIERTEN STEUERUNG VON ARBEITSABLÄUFEN BEI SCHWERLASTFAHRZEUGEN
SYSTÈMES DE GESTION POUR L'ÉVALUATION ET CONTRÕLE AUTOMATISÉ DES SÉQUENCES DE TRAVAIL IMPLIQUANT DES VÉHICULES LOURDS

(30) Priority: 10.02.2022 EP 22156062
(43) Date of publication of application: 18.12.2024
(73) Proprietor: Volvo Truck Corporation, 405 08 Göteborg (SE)
(72) Inventor: STRÖMBERG, Bo, 426 53 Västra Frölunda (SE); SOHLBERG, Per, 436 52 Hovås (SE)
(74) Representative: Zacco Sweden AB
(86) International application number: PCT/EP2023/052935
(87) International publication number: WO 2023/152109

(56) References cited:
- US-A1- 2016 292 846
- US-A1- 2020 109 527
- WIKIPEDIA CONTRIBUTORS: "Vehicle-to-everything", 26 June 2018 (2018-06-26), XP002806989, Retrieved from the Internet <URL:https://en.wikipedia.org/w/index.php?title=Vehicle-to-everything&oldid=847643174> [retrieved on 20220705]

## Description

### TECHNICAL FIELD

This invention relates generally to heavy-duty vehicles such as trucks and construction machines and in particular to dump trucks and excavators for use in mass excavation projects. Methods and automated management systems for evaluation and continuous improvement of workflows involving heavy machinery are disclosed, and also wireless portable devices and in-vehicle support systems adapted for the task.

### BACKGROUND

Larger infrastructure projects and distribution systems for goods normally involve many different entities which perform respective sub-tasks in complex interdependency. For instance, in a mass excavation project excavators dig out material which is then transported away from the work site to a material deposit site by dump trucks. The deposit site, the dump trucks, and the excavators all have their respective capacities which need to be matched to each other in order to maintain a high project efficiency.

There is a desire to monitor the degree of efficiency that is currently being achieved in a given project, both on the production asset level as well as on application task level and project level, and to present the analysis results to the relevant stakeholders in an automated and efficient manner. Some example projects where this is desirable include, e.g., large construction projects, mass excavation projects, and large-scale mining operations. Automated management systems for this purpose that are easy to use, and which do not require extensive production asset upgrades are desired.

Since larger infrastructure projects often involve equipment from several different manufacturers and of varying age, it is furthermore desired that the management systems are agnostic to the equipment type and brand that are used in a given project.

US 2016/292846 discloses a type of production asset monitoring system which uses sensor data to determine operating states of one or more machines, such as haulers and excavators, on a construction site.

### SUMMARY

It is an object of the present disclosure to provide management systems for automated evaluation and control of workflows involving heavy-duty vehicles. This object is at least in part obtained by a production asset monitoring system for monitoring current operating states of one or more production assets. The production asset monitoring system comprises at least one control unit that is arranged to associate a respective state machine which each asset in the one or more production assets. Each state machine implements a plurality of operating states which can be categorized as productive or as unproductive. The production asset monitoring system further comprises a sensor system configured to automatically detect a current operating state for each state machine. Examples of current operating states are, e.g., "stationary", "moving", "carrying cargo", "not carrying cargo", "excavating", "loading", "operating", "not operating" etc. The at least one control unit of the production asset monitoring system is configured to aggregate the operating states of a plurality of assets into a report indicative of production asset utilization, where the utilization of a given asset depends on the categorization of the operating states of the respective state machine over time. The one or more production assets may, e.g., comprise any of an excavator, a conveyor belt, a wheel loader, a docking bay, a crane, a screed, a paver, a compactor, and/or a dump truck. The production asset monitoring system may be configured to trigger an automated action as part of the report indicative of production asset utilization. This automated action may comprise automated transmission of a utilization message sent to a project panner, such as a warning about high inefficiency in some part of a construction project, a display of asset utilization on a display device, or automated generation of one or more work orders to improve asset utilization. The control unit is preferably arranged to categorize the operating state of at least one state machine as productive or as unproductive based on the current operating state of at least one other state machine. The control unit is preferably configured to generate the report indicative of production asset utilization based at least in part on the categorization of the operating states of the state machines over a time period which can be predetermined, configured by an operator of the monitoring system, or adapted in dependence of the project time duration.

A state machine associated with a production asset transitions between states as time progresses. A truck may, e.g., be associated with a state machine with the states moving and stationary. The occupancy pattern of various states and the transitions between states provides valuable input to the management systems for evaluation and continuous improvement of workflows involving heavy-duty vehicles. For instance, the amount of productive time associated with a given asset can be determined by monitoring the transitions of the state machine and keeping track of how much time is spent in a given state or a given category of states. Several advantages are obtained from the fact that the production asset monitoring system is configured to *aggregate* the states of a plurality of assets into a report indicative of production asset utilization, at least in part since this allows for interdependencies between the local state machines of the different production assets to be accounted for in the production asset utilization report as opposed to considering the local state machines of the production assets separately. The current operating state for at least one of the state machines may for instance be categorized as productive or as unproductive in dependence of an operating state of at least one other state machine. This way an operating state where, e.g., a truck is standing still may be categorized as productive if the truck is standing still because it is receiving cargo from a wheel-loader categorized as being in a productive state, and unproductive if the truck is instead stuck in traffic without association to another production asset performing value-adding work that involves the truck.

In other words, a production asset monitoring system is disclosed herein which comprises at least one control unit that is arranged to associate respective state machines with a number of production assets. Each state machine implements a plurality of operating states, which operating states can be categorized as productive states and as unproductive states. The production asset monitoring system comprises a sensor system configured to automatically detect a local operating state for each state machine. The at least one control unit of the production asset monitoring system is configured to aggregate the local operating states of the production assets by categorizing the operating state of each production asset as productive or unproductive based on the aggregation of local operating states. An automated action related to a workflow in a project involving the production assets can be triggered based on the categorization of operating states, such as generation of an automated asset utilization report, inefficiency warning, or indication of over-allocation and under-allocation of production asset in a project.

An operating state may also be categorized as a set-up state in addition to the productive state categorization and the unproductive state categorization. Time spent by a production asset in a set-up state may, e.g., comprise necessary site cleaning activities, tool change, or maneuvering the asset into position in order to enable performance of a value-generating activity. The set-up state is perhaps not directly generating value, but it is also not un-productive. By adding the set-up state categorization to the possible state machine categorizations of a production asset, a more refined production asset utilization report can be generated which also accounts for set-up time. Too much set-up time can be an indication of inefficiency in a work project, and too little time spent in set-up may also be undesired, e.g., because necessary maintenance work is not being performed which could jeopardize future work progress.

According to some aspects, an operating state categorized as productive is further associated with a degree of productivity, e.g., on a scale from 1-10 or as a relation determined relative to some reference value such as a nominal speed over ground by a vehicle. This additional information associated with a state categorized as productive can be used to refine the production asset utilization report, e.g., by providing information on average speed of a truck underway in relation to an expected speed, the frequency of bucket digging operations performed by an excavator, and so on. By grading the productive states of the production assets in this manner, it becomes possible to quantify a degree of efficiency for a given application or work task. A monitoring system where the state machines lack this set-up state feature will not be able to provide this type of information on degree of efficiency.

The one or more state machines are preferably implemented on respective portable wireless devices, which in this case is an example of a control unit. This means that the state machine executes, e.g., on a smart phone or a tablet device which an operator brings with him at the start of the work shift. These devices are separate from the actual production asset and can therefore be used in an agnostic manner when it comes to type of production asset, brand, or version. It is an advantage that the state machines do not require complex updates to existing production assets. Of course, some or all state machines can also be executed on in-vehicle control units, or at least partly on remote devices such as cloud-based server solutions and the like. It is a further advantage that the portable wireless device can be used to communicate with the corresponding production asset operator, which opens up a valuable communication path that a system controller or the like can use for communication with a given production asset.

According to some aspects, a state, or a transition between two states of a first state machine in the production asset monitoring system is conditioned on a current state of an associated second state machine, i.e., the two state machines are linked to each other. This allows for definitions of interdependencies between two or more state machines to form a more complex system of state machines. For instance, a given production asset may only be categorized as being in a productive state if also a number of other production assets are productive. To give a simple example - suppose that a conveyor belt is associated with a state machine, and the conveyor belt is currently in an active state where the conveyor belt moves. If no dump truck is at the location of the conveyor belt and is being loaded, then the state of the conveyor belt may not be categorized as a productive state, despite the conveyor belt being in a moving state. Also, a truck standing still waiting for the conveyor belt to load material onto the truck bed may be categorized as being in a productive state while a truck standing still while the conveyor belt is not moving is instead categorized as being in an unproductive state.

The quality of the production may also be an important parameter in determining whether a given production asset is in a state categorized as productive or not. For instance, suppose that a paving train comprising, e.g., screeds and compactors are producing in the sense that asphalt is being laid, but the quality of the road surface produced is not satisfactory (as determined by a surveyor machine), then a state where the machines are operating, e.g., moving, may still be categorized as unproductive. In this example the state categorization of the production asset states in the paving train are determined in dependence of each other, where the state categorization of all assets in the paving train are dependent on the state of the surveyor machine (acceptable quality state vs unacceptable quality state).

According to other aspects, the states in at least one of the state machines comprises a transporting state, a loading state, an unloading state, and a waiting state, where the transporting state, the loading state, and the unloading state are categorized as productive states and the waiting state is categorized as an unproductive state. The state machine can also be configured to monitor an asphalt laying process, landfill operation, or the like, where for example pavers, compactors, graders, concrete trucks and pumps, and other assets are active.

The production asset monitoring system is optionally also arranged to determine a correlation between the occupied states in one of the state machines with respect to the occupied states of another state machine, and to detect a dependency between two production assets based on the correlation. This allows an operator of some production process to identify more complex interdependencies between the various operations of the production assets in a project. Such dependencies may otherwise be hard to detect and analyze. The interdependencies discovered based on this mechanism can be in several steps. For instance, a connection between two production assets via a third production asset can be identified in order to make the overall production process more efficient.

The sensor systems discussed herein may comprise one or more positioning systems associated with respective state machines. Positioning systems based on, e.g., proximity to landmarks, global positioning systems, and other means of localization can be used to obtain information about the current operating state of a given production asset. For instance, a truck which is located at a service and maintenance point is most likely not in a productive state, which an excavator located at a digging site may very well be producing. Positioning systems arranged in two or more production assets can be used to form an association between the assets. The distance between two or more assets can, for instance, be determined and used to form the association. The local states of two or more production assets being associated with each other in this manner may be aggregated in order to determine a more refined categorization of operating state for inclusion in the production asset utilization report.

The sensor systems used to automatically detect state transitions may also comprise one or more V2X communication systems associated with the respective state machines. The V2X systems may be used to collect data from other vehicles and devices in the infrastructure, from which data a current state can be discerned. The transmission exploited by the V2X system for data gathering and state machine update need not necessarily be intended for the state machine system per se. Rather, the V2X system can be used to sniff the wireless communication media for data which can be used to update the state machine, such as a transmission from a loading asset to a transportation asset signaling loading completion. V2X systems arranged in two or more production assets can also be used to form an association between the assets. Two or more assets may communicate with each other and set an association between the assets for a given application, such as loading or unloading of material. The local states of two or more production assets being associated with each other in this manner may be aggregated as discussed above in order to determine a more refined categorization of operating state for inclusion in the production asset utilization report.

The sensor system may of course also comprise one or more on-board vehicle sensor systems associated with respective state machines. Such sensors may range from pressure sensors, hydraulic system transducers, and other forms of actuator signals which can be used to determine a current operating state of a production asset.

The control unit may also be arranged to control at least one production asset based on the report indicative of production asset utilization. This control may comprise a direct control of the asset, such as a control command to start an engine in order to warm-up an excavator or the like, or a request sent to an autonomous production asset for performing a specified task. The control may also comprise an in-direct control of a production asset, such as sending a request to an operator of a production asset to stop or to start performing a task. The request may also comprise instructions regarding where to go, i.e., which deposit site a truck should go to after having received a load. Traffic control may also be implemented by the control units discussed herein, i.e., sending out instructions to production assets to increase or decrease a speed of operation.

The control unit may also be arranged to determine a resource allocation parameter associated with the one or more production assets in a work project based on the production asset utilization report. This resource allocation parameter may comprise suggestions for adding more resources to a project, perhaps of a given type, or removing resources of a given type from the project.

There is also disclosed herein methods, computer programs, computer readable media, computer program products, remote servers, wireless devices, and vehicles associated with the above discussed advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention.

### BRIEF DESCRIPTION OF THE DRAWINGS

With reference to the appended drawings, below follows a more detailed description of embodiments of the invention cited as examples. In the drawings:
- Figure 1: shows an example heavy-duty vehicle.
- Figure 2: schematically illustrates a mass excavation project.
- Figure 3: shows an example of inefficiency in an infrastructure project.
- Figure 4: schematically illustrates a state machine.
- Figure 5: is a flow chart illustrating a method.
- Figure 6: schematically illustrates a control unit; and
- Figure 7: shows an example computer program product.

### DETAILED DESCRIPTION OF EXAMPLE EMBODIMENTS OF THE INVENTION

The invention will now be described more fully hereinafter with reference to the accompanying drawings, in which certain aspects of the invention are shown. This invention may, however, be embodied in many different forms and should not be construed as limited to the embodiments and aspects set forth herein; rather, these embodiments are provided by way of example so that this disclosure will be thorough and complete, and will fully convey the scope of the invention to those skilled in the art. Like numbers refer to like elements throughout the description.

It is to be understood that the present invention is not limited to the embodiments described herein and illustrated in the drawings; rather, the skilled person will recognize that many changes and modifications may be made within the scope of the appended claims.

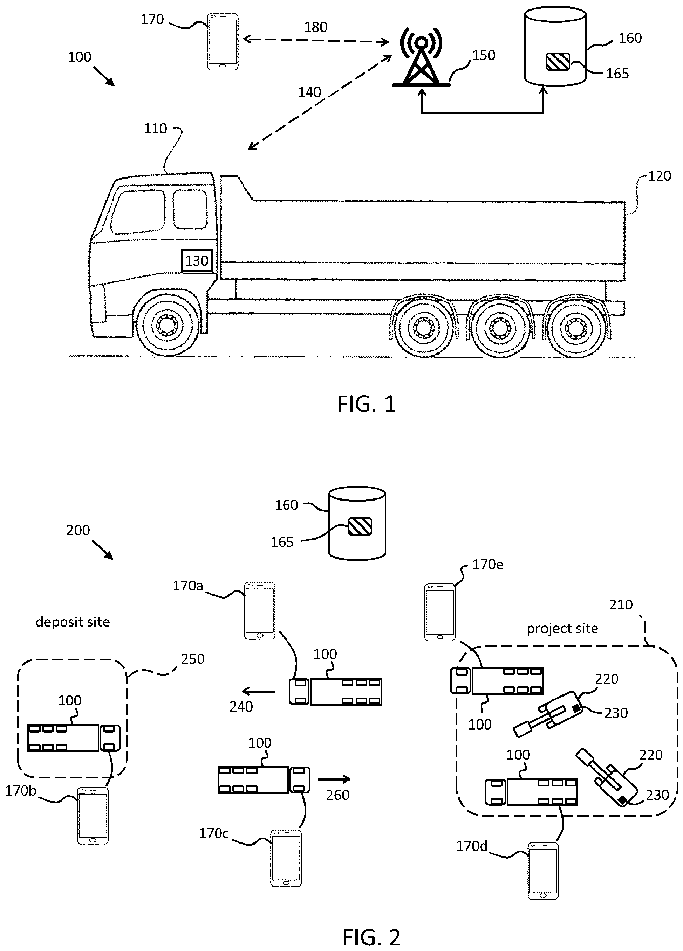

Figure 1 illustrates an example vehicle 100 for cargo transport where the herein disclosed techniques can be applied with advantage. The example vehicle 100 is a dump truck comprising a cab 110 and a bed 120 which can be used to transport material away from a mass excavation site, for instance as part of a larger infrastructure project such as a road construction project, a tunnel construction project, or a building site. An excavator, wheel loader, conveyor belt, crane, or other form of loading asset is used to load material onto the dump truck, which then transports the material away to a destination where the material is unloaded by another production asset.

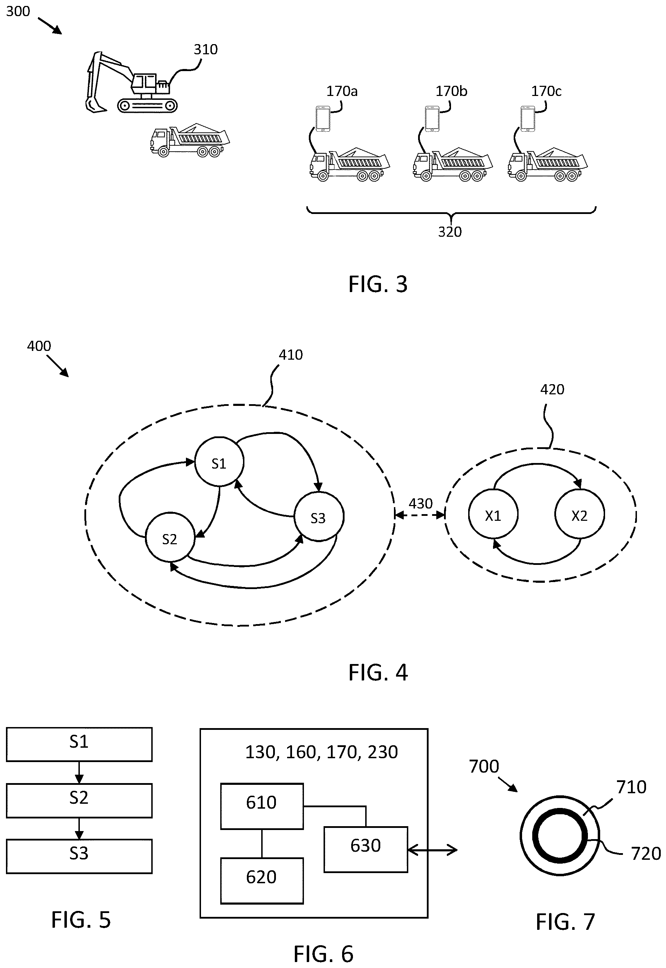

A control unit 130 on the vehicle may be in communication with a remote server 160 via wireless link 140 over an access point 150 that could form part of a cellular access network such as a fifth generation (5G) or sixth generation (6G) wireless access network. The control unit 130 and the remote server 160 may comprise processing circuitry, as will be discussed below in connection to Figure 6.

A heavy-duty vehicle 100 such as a dump truck or an excavator can be associated with a number of different operating states. For instance, a dump truck may be associated with a transporting state where the dump truck is transporting material from one site to another site, a loading state where material is being loaded onto the dump truck, and an unloading state where material is being unloaded from the dump truck. Both loading, transporting, and unloading can be categorized as productive states where the machine is contributing to the project it is part of. The dump truck may also be associated with one or more states which can be categorized as productive or an unproductive, A waiting state where the vehicle is waiting to get loaded or unloaded can be categorized as productive if a nearby loading asset is in a productive state, and as unproductive if no other asset is nearby and performing useful work. A turned-off state where the machine is powered down, and/or a blocked state where the vehicle is prevented from operating or is forced to operate at reduced speed due to traffic, on-site personnel, or other form of blockages, is often categorized as unproductive.

Generally, heavy-duty vehicles and machinery such as dump trucks, excavators, wheel loaders, pavers, compactors, loading docks and conveyor belts are referred to herein as production assets. The vehicle 100 is an example of a production asset. A production asset is, generally, a machine or vehicle that performs activities as part of an application. Applications are activities that production assets partake in as part of a work step. An application may, e.g., be the loading of material by an excavator onto a hauler or the off-loading of a dump truck at a deposit site. Work steps are revenue generating tasks which are performed on a job site. A work step often involves a number of activities. Some work steps may be industry specific, but often they exist within several different industry segments.

A production asset is associated with an identification of some sorts, allowing an operator to identify a particular asset among a group of assets, even if the group of assets comprise equipment of the same type and brand. One such form of identification is a registration number which most public road vehicles are associated with. A serial number or the like can also be considered as identification data. An operation involving one or more production assets can be evaluated on different levels of granularity. The levels may comprise a production asset level where data related to a given production asset is evaluated, and an application level, i.e., activity or task such as digging or transporting, which may involve a plurality of different operations, potentially by one or more production assets. A work step level is the level where more than one asset is performing a job or is acting as part of a supply chain to complete a value-generating task. Finally, a production level comprises an entire value adding operation. For instance, in a mass excavation project, the production level would involve both excavators performing excavation and loading, transport assets which transport the material away from the excavation site to a deposit site of some sort, as well as the operations performed at the deposit site to unload the transportation assets. It has been realized that various forms of sensors and also wireless communication systems involving the production assets can be used to detect which operating state out of a plurality of operating states that a production asset is currently in. Various sensor technologies can be used for the purpose, including pressure transducers configured to detect when hydraulic cylinders of an excavator are being actively used, microphones or vibration sensors arranged to detect when a machine is operating, positioning systems that may determine when a machine is moving, or is located at some key location associated with a given type of activity, such as refueling or maintenance operations. Once the operating state of a given vehicle is detected, it can be categorized as productive or as unproductive. This categorization can be done based solely on the data available locally at a given production asset. It has, however, been realized that further advantages can be obtained if the categorization is done by aggregating the operating states of a number of related production assets on work step level or production level.

This disclosure relates to various implementations of a state machine on one or more production assets where the states can be detected and logged by means of, e.g., on-board sensors, external sensors, asset positioning systems, and communication links to other production assets. The state machine of a given production asset is then continuously updated as the asset is performing different tasks or is being prevented from performing a task due to some external circumstances, such as a traffic jam, equipment service and maintenance, and equipment failure. The state machine can be used by a production asset management system for evaluating performance and utilization on both asset level and application level. The production asset management system can for instance be used to evaluate a relative percentage of productive state occupancy in relation to unproductive state occupancy, where of course it is desired to keep the level of productive state occupancy as high as possible in relation to the unproductive state occupancy. It may be difficult to determine if a production asset state determined locally is to be categorized as productive or not based solely on the operations and general behavior of the single production asset. A truck may, for instance, be standing still because it is stuck in a traffic queue at a construction site (an unproductive state), and also because it is participating in a loading application together with an excavator that places cargo onto the truck bed (a productive state). However, if sensor systems are arranged on the production assets to detect a local operating state of the asset, then the different local operating states of a group of related production assets can be aggregated into a report of production asset utilization which comprises a categorization of production asset state that is based also on dependencies between production assets that are associated to each other on application or work task level. Such dependencies may, e.g., relate to various permanent or temporary associations between production assets which are formed as they commence and cease activities related to a common application or work task. In other words, a local state of a given production asset state machine can be combined with local states of other production asset state machines, to aggregate performance and utilization data up to work step and production level, in order to provide a more accurate report of production asset utilization. The production asset monitoring systems discussed herein are automated monitoring systems which provide production asset utilization reports in an automated manner without the need for human intervention.

It is interesting to note that a report of product utilization based only on the local states of a given production asset may indicate that the production asset is highly utilized, while a report of asset utilization based on an aggregation of operating states of more than one production asset may indicate that the same production asset is in fact underutilized. A truck may for instance be moving around a lot (appearing productive), when it is in fact never near any loading assets, and therefore not performing any value-adding transportations.

Some interesting aspects of the present disclosure involve time series analysis of the state transitions in a group of related state machines. By detecting correlations in state transitions among the production assets, complex dependencies can be identified which can be used to optimize a given production process.

The data obtained from such a system of state machines can then be analyzed and presented to relevant stakeholders, for instance as part of a production monitoring human-machine interface (HMI). The relevant stakeholders can then use the data as base for decisions for corrective actions and optimization of the value adding operation that is being analyzed. The HMI can also be integrated into a project planning software package, where it can be used to provide important data for improving efficiency of a given project plan.

In more general terms, there is disclosed herein a production asset monitoring system for monitoring current operating states of one or more production assets. The production asset monitoring system is arranged to associate a respective state machine which each asset in the one or more production assets, where each state machine implements a plurality of operating states, out of which operating states at least one state can be categorized as a productive state and at least one state can be categorized as an unproductive state. The operating states of a given production asset can be predetermined, or manually configured by a user. A production asset may be associated with a number of default operating states, which can be refined at a later stage by a production manager or operator of the production asset monitoring system. A truck may, e.g., be associated with the operating states "moving", "stationary". An excavator can be associated with the operating states "excavating", "moving", "stationary". Each state can be categorized as productive or as unproductive as the production asset is operating.

The production asset monitoring system comprises a sensor system configured to automatically detect a local current operating state for each state machine and thus at least implicitly also transitions between states in each state machine. This means that the need for manually configuring a current state of each asset as it transitions between different work tasks is limited, which is an advantage. Of course, manual configuration of state machines can still be implemented in some systems, to allow operators to manually configure the current state of a state machine, but this is entirely optional given the feature of automated sensor-based state detection. The production asset monitoring system is then configured to aggregate the states of a plurality of assets into a report indicative of production asset utilization. This is an important step, since it allows categorization of states in a state machine as productive and as unproductive in dependence of other state machines in the system. A set of predetermined rules may, e.g., be defined for the categorization of operating states. For instance, the truck state "stationary" can be categorized as productive if a loading or unloading asset (such as an excavator, wheel loader, crane, or conveyor belt) is nearby and in the state "loading" or "unloading". The same state can be classified as unproductive if no loading asset is nearby. The categorization rules may be defined based on relations with other production assets. Some operating states may be automatically categorized as productive or unproductive, while other operating states may need a relation to another state machine in order to be classified as productive or as unproductive. The state "excavating" of an excavator may, e.g., be automatically categorized as productive even if no relation to other state machines have been formed. The state "moving with cargo" of a truck can also be automatically categorized as productive, while the state "stationary" in a truck state machine may need a relation to another state machine in order to be categorized as productive - otherwise it will be categorized as unproductive by the control unit. To summarize, each production asset in a group of production assets is associated with a respective state machine with operating states. A set of rules is defined that govern the transition between states in the state machine. Sensor signals are used to detect changes in state, and manual configuration may also be allowed. The states are then categorized over time as productive or as unproductive by the control unit based on predetermined categorization rules. Some categorization rules may only involve the local current state of a production asset, such as "excavating = productive" and "stationary = unproductive", while other categorization rules involve more than one state machine, such as "stationary = productive if other asset nearby and in productive state".

A state machine and devices for detecting which state a given production asset is currently in can be implemented in various manners, ranging from a realization in a portable wireless device such as a smartphone or tablet device, to dedicated vehicle sensors, processing, and HMI. External data can also be gathered, e.g., via vehicle to vehicle (V2V) and vehicle to infrastructure (V2I) wireless communication systems, often collectively referred to as vehicle to anything (V2X) communication. The different production asset states can then be uploaded to a central processing unit or can be processed locally, possibly in a distributed manner of processing.

The state detection arrangement for each production asset can also be implemented in a site system or "cloud platform", e.g., on the remote server 160 as a collection of state machines 165, which is gathering data from assets involved in a given project or application. The site system then processes the information and generates reports to relevant stakeholders. One or more state machines can of course also execute on respective on-board vehicle control units 130

Data can be transferred within the production asset monitoring system in real time, near real time or at fixed intervals depending on the need for follow-up of the current efficiency in a given project. Data can also be transferred on-demand or triggered by the occurrence of some predetermined event.

It is generally understood that many different types of sensors can be used to detect and/or to indirectly infer the state which a given state machine is in. Positioning systems are suitable for determining where a given production asset is currently located and can thereby be used to infer a current operating state of the asset based on a predetermined rule. Position sensors may comprise satellite system receivers such as global positioning system receivers (GPS), or local positioning systems such as proximity sensors or vision-based systems such as vision-based registration plate readers and various forms of radio-frequency ID (RFID) systems. For instance, a stationary production asset located at a workshop, servicing center, or refueling station can be assumed to be in an unproductive operating state, i.e., not currently contributing to the general progress of the project to which it has been assigned. On the other hand, a transportation asset on route (i.e., in moving state) from one project site to another project site is most likely performing a productive task of transporting some material, unless some other sensor indicates that the transportation asset is currently unloaded, or if a load receipt has not been generated in some period of time that involves a related production asset.

The relations between sensor signals and the states of each state machine can be predetermined or adapted over time. For instance, the states and associated state transitions of a given state machine may be associated with a set of fixed manually configured rules that define the operations of the state machine in response to various forms of sensor signals. For instance, a simple state machine may comprise an active state and an inactive state, where the active state of the state machine is entered as soon as the machine is performing some sort of operation, e.g., is operating is hydraulic system as detected by a pressure transducer or is moving as detected by an on-board positioning system.

The relations between sensor signals and the states of each state machine can also be adapted over time, perhaps as part of an artificial intelligence system which is configured by training. Such training may then comprise sensor signal inputs along with ground truth, i.e., a set of state transitions which have been either manually configured or pre-recorded. The training data may be generated artificially using computer simulation, or by manual annotation, i.e., by an operator inputting state manually as a production asset is used over time. The artificial intelligence system is then able to converge to a state where it can determine state based on sensor signal input.

The state machine configuration for a given type of production asset, including the rules for transitioning between states, can be pre-configured at the start of a production project, e.g., as part of the project planning.

The sensor system may also comprise one or more V2X communication systems associated with respective state machines as mentioned above. A V2V, V2I, or V2X system can be used to exchange data between different production assets, and this data can be used to update the various state machines associated with some type of asset interaction. Communication of a load receipt from one production asset to another production asset is a good example of how a V2X system can be used to infer the current state of a state machine associated with some production asset. It is also appreciated that a V2X system can be used to force a state transition in a production asset. For instance, an excavator loading a transportation asset may communicate with the loading asset via V2X and trigger a state change into a loading state in the state machine of the transportation asset. Once the loading is done, a load receipt may be generated, and a state transition can be forced which places the state machine of the transportation asset in some other state than the active loading state. This is an example of how the current state of one or more production assets, i.e., productive, or unproductive, depend on the state of other production assets. A V2X system can be used to force a state categorization as productive or as unproductive. A wheel loader loading material onto a truck may, e.g., connect with the truck using a wireless link to force a categorization of state. A truck entering a workshop for servicing may also connect with a wireless system at the workshop, and its current operating state (regardless of whether it is, e.g., moving, or stationary) can be automatically categorized as unproductive.

An asset state categorization on higher levels, e.g., application level or work task level, can be determined from an aggregation of production asset local states as sensed by on-board sensor systems. The location of the production assets may be accounted for when associating one production asset to another asset in this manner, as well as associated information such as weather data, road condition data, traffic data, and so on.

A production asset state is preferably associated with a start time and a stop time, such that each state event can be associated with a time duration. This time duration may also form part of the production asset utilization report, and it may be used to determine a degree of efficiency for a production asset or for a group of production assets involved in an application or a work task. For example, a journey from a digging site to a deposit site can vary in time. Even if the journey as such is categorized as productive it may be more or less efficient depending on how long the journey takes. An operating state categorized as productive may therefore be associated with a degree of productivity. A truck may, e.g., be driving very slowly relative to a nominal speed, or faster than expected. A single production asset state machine having a current state determined based only on information gathered for that production asset may not be able to identify the cause of an inefficiency in a productive state. However, aggregating the states of a plurality of assets into a report indicative of production asset utilization, such inefficiencies can be analyzed in more detail and their root causes identified. A vehicle considered in isolation may not be able to identify the root cause of an inefficiency, but a higher layer processing unit having access to aggregated information from more than one production asset may be able to identify the cause of the inefficiency and do a more accurate categorization of operating states compared to if the categorization was done locally in a single production asset. The weather may, for instance, cause traffic delays which are not due to the production assets themselves or the project organization, another related production asset may have broken down, another truck (perhaps participating in a different work task or project) may be blocking an entrance to a work site, and so on. At a work site, a typical unproductive state is waiting to enter the site or waiting to be loaded in the site. Any queuing and extensive maneuvering is unproductive and can often be automatically labelled as such by setting up predetermined categorization rules, such as "unproductive if asset is stationary outside deposit site X".

Set-up times are a necessary part of many work tasks but are not in themselves productive. Changing buckets on an excavator or moving an excavator are typical examples of activities that involve set-up time. If these activities are performed when no other assets are in place to be loaded, or partake in some other value-generating activity, then the set-up time is not as detrimental to efficiency of the work task as it would have been if some other production assets get held up because of the set-up time activity. Again, by aggregating the states of a plurality of assets, a more informative report indicative of production asset utilization can be generated. Referring again to Figure 1, the control unit 130 may optionally be arranged to determine a current load on the bed 120, and to report this load to the remote server 160 or to the wireless device 170 associated with the production asset, possibly together with data such as identification data to identify the vehicle 100, a time stamp, a starting location, and a destination of the current transport mission. The wireless device 170 may also comprise the type of processing circuitry discussed herein, discussed in more detail below in connection to Figure 6. This type of data may be referred to as a digital load receipt. A digital load receipt can also be issued by the loading asset, e.g., an excavator or a wheel loader. These loading assets may also comprise respective on-board control units and systems configured to determine a weight of loaded material, and format a report which may also comprise other data items, such as identification data to identify the loading asset, along with a timestamp. These load receipts are equipment agnostic and can be used to infer a state of, e.g., a transportation asset such as a dump truck. The load receipts can also be used to infer a current state in a state machine associated with a production asset used for loading transportation assets. For instance, an excavator or wheel loader which is generating load receipts can be categorized as being in a productive state, whereas an asset which has not generated a load receipt in a given period of time can be categorized as being in an unproductive state of operation. In this manner states of state machines associated with a plurality of production assets can be categorized as productive or as unproductive based on the generation of load receipts in a project such as a mass excavation project. The states of such associated production assets may be categorized jointly in an aggregated manner, in order to generate a refined report of production asset utilization which also accounts for interdependencies between production assets.

It is furthermore understood that on-board vehicle sensor systems can also be used to update the various state machines comprised in the production asset monitoring system. For instance, a vibration sensor or microphone can be used to infer when a given machine is operating and when it is stationary, perhaps also powered down. A vision-based sensor, a radar transceiver, or a lidar system can of course also be used to determine when a production asset is moving and when it is in stand-still state. Pressure sensors on a hydraulic system can be used to infer when an excavator is excavating and when it is not performing any productive tasks. Thus, on-board vehicle sensor systems detect current operating state, and the control unit then categorizes the state as productive or as unproductive based only on the local data in some cases, but often based also on the operating states of one or more other production assets in an aggregated manner.

Figure 2 illustrates an example production process in a mass excavation project 200. There are one or more project sites 210 in the project where excavators 220 are used to dig up material which is then loaded onto dump trucks 100. The trucks 100 then transport the excavated material away to one or more active deposit sites 250, before returning 260 again to the project site to receive a new load. Note that, generally, a project can comprise more than one project site and more than one deposit site.

The excavators 220 in the example of Figure 2 comprises control units 230 which are arranged to generate data such as load receipts. A load receipt is a unit of data which indicates, e.g., a weight of the material that has been loaded onto a given dump truck100. The load receipts are uploaded to the remote server 160, or shared with a wireless device 170a, 170b, 170b, 170d, 170e associated with a given production asset.

A collection of obtained such load receipts constitute historical load data associated with transports of the project at the site, and if the load receipts associated with a given production asset are considered over time, they may be used to infer transitions between states of a state machine associated with the production asses, i.e., to monitor when the production asset transitions from a state categorized as productive into a state categorized as unproductive and back again.

A unit of historical load data is generally associated with some form of time stamp which indicates when during the day that the load was transported. A date is often also included in a unit of historical load data, as well as a source location and a destination allowing to identify the transport route of a given transport. These digital load receipts provide information about the specific project, such as natural variations in production rate over a week. The information in the digital load receipts can also be complemented by additional data, such as weather reports, ambient temperatures, and traffic reports which indicate traffic density along, e.g., key routes.

Of course, load data can also be obtained from other sources, such as the dump trucks which may be configured to measure a weight of transported material. A device located at the deposit site may also comprise means for determining a weight of the material deposited by a given dump truck.

Figure 3 illustrates an example 300 of how a global positioning system such as a GPS receiver, arranged, e.g., in connection to processing circuitry of a wireless device 170a, 170b, 170c can be used to detect that one or more production assets have transitioned into a waiting state (which is categorized as unproductive). In Figure 3 the production asset 310 tasked with loading material onto dump trucks has failed for some reason, and the dump trucks have therefore queued up 320 waiting to receive material for transport away from the excavation site. A reasonable action to perform in such a case is to reallocate dump trucks to different excavators. It is a purpose of the systems discussed herein to facilitate such reallocation by providing the necessary information to the operator.

Figure 4 schematically illustrates an example state machine 400 associated with some production asset. The state machine comprises a set of internal states 410, here denoted as S1, S2 and S3, and also a set of external states, here denoted as X1 and X2. The two sets of states are optionally in some form of dependency 430 with respect to each other. For instance, suppose state S3 is associated with a loading state, then the state machine 410 may be configured to only enter this state in case another production asset is on a given state, say X1. For instance, suppose that the state transitions between states S1, S2, and S3 are governed by geographical position, and that state S1 is an unproductive state (or subset of states). Then, the state machine may only transition into state S3 if there is an active material loading asset nearby tasked with loading material onto the production asset. If this is not the case, then the production asset will be placed in state S1 since it is inactive at the loading site and waiting to receive material for transport away from the site. Thus, generally, a transition between two states S1, S2, S3 of a first state machine 410 in the production asset monitoring system is optionally conditioned on a current state X1, X2 of an associated second state machine 420.

The state machines of the different production assets transition between states over time. Sometimes a dependency arises between the states of one state machine and the states of another state machine. This type of dependency can be very interesting from an efficiency management point of view. The production asset monitoring systems discussed herein are optionally arranged to determine a correlation between the occupied states in one of the state machines with respect to the occupied states of another state machine, and to detect a dependency between two production assets based on the correlation. Correlation can, for instance, be determined from a relatively straight forward time series analysis of the transitions in one state machine compared to the transitions in another state machine. In case a dependency is identified, it can be used to investigate the root cause of a given inefficiency in a project. Suppose for instance that a dependency between the state machine of a conveyor belt and the state machines of a group of transportation assets is detected. Suppose further that the state machines of the transportation vehicles are detected as entering into an unproductive state in correlation with the state transitions of the conveyor belt. This may be indicative of an inefficiency that can perhaps be remedied by adding another conveyor belt to the operation, or by reconfiguration of the transportation strategies in the overall production project.

The production asset monitoring system comprising the control unit is optionally arranged to trigger and/or to execute one or more automated actions based on the outcome of the production asset utilization report, for instance to control at least one production asset based on the report indicative of production asset utilization. The control of the production asset may involve sending work orders to a production asset to trigger it to start activities and/or to stop activities related to a given application or work task. The production asset monitoring system may also be arranged to perform traffic management functions, such as directing production assets to suitable locations based on the production asset utilization report, requesting production assets to work faster or slower, such as increasing or decreasing the speed of a truck on route to some site.

The control unit 130, 160, 170, 230 of the production asset monitoring system may also be arranged to determine a resource allocation parameter associated with the one or more production assets based on the report indicative of production asset utilization. For instance, in case the production asset states, interpreted together in an aggregated manner, indicates that significant resource waste occurs at some work site or location, then production asset resources may be removed from the site in order to see if efficiency increases. A simple way to do this is to vary the resource allocation parameter over time b increasing and decreasing it while monitoring the report indicative of production asset utilization. If production asset utilization improves as a result of the change in the resource allocation parameter, then the change can be kept. If production asset utilization becomes worse as a result of the change in the resource allocation parameter, then the change can be discarded, and the resource allocation parameter set to what it was before the change. The resource allocation parameter may comprise, e.g., assigned number of production assets such as trucks, excavators, etc. The resource allocation parameter may also comprise personnel assigned to a given project.

Figure 5 is a flow chart which briefly summarizes the above discussion in terms of a method. It is appreciated that the various optional aspects of the above discussed techniques can be incorporated as parts of the method in a straight-forward manner. The method can be performed on any of the above discussed processing devices, i.e., in the vehicle control unit 130, on the remote server 160, and/or on the wireless device 170. It is furthermore appreciated that the method can be distributed over more than one processing unit, and also over more than one type of processing unit.

Figure 5 schematically illustrates a computer implemented method executed in a production asset monitoring system, for monitoring current operating states of one or more production assets. As discussed above, the method comprises associating S1 a respective state machine which each asset in the one or more production assets, where each state machine implements a plurality of operating states, out of which operating states at least one state can be categorized as a productive state and at least one state can be categorized as an unproductive state. The method also comprises detecting S2 a current operating state for each state machine based on output data from a sensor system configured to detect the current operating state for each state machine, and aggregating S3 the states of a plurality of assets into a report indicative of production asset utilization.

Figure 6 schematically illustrates, in terms of a number of functional units, the components of a control unit such as the VUC 130, 230 or the remote server 160. The control unit is configured to execute at least some of the functions discussed above for control of a heavy-duty vehicle 100. Processing circuitry 610 is provided using any combination of one or more of a suitable central processing unit CPU, multiprocessor, microcontroller, digital signal processor DSP, etc., capable of executing software instructions stored in a computer program product, e.g., in the form of a storage medium 620. The processing circuitry 610 may further be provided as at least one application specific integrated circuit ASIC, or field programmable gate array FPGA.

Particularly, the processing circuitry 610 is configured to cause the control unit 101 to perform a set of operations, or steps, such as the methods discussed in connection to Figure 5. For example, the storage medium 620 may store the set of operations, and the processing circuitry 610 may be configured to retrieve the set of operations from the storage medium 620 to cause the control unit 600 to perform the set of operations. The set of operations may be provided as a set of executable instructions. Thus, the processing circuitry 610 is thereby arranged to execute methods as herein disclosed.

The storage medium 620 may also comprise persistent storage, which, for example, can be any single one or combination of magnetic memory, optical memory, solid state memory or even remotely mounted memory.

The control unit 130, 160, 170, 230 may further comprise an interface 630 for communications with at least one external device. As such the interface 630 may comprise one or more transmitters and receivers, comprising analogue and digital components and a suitable number of ports for wireline or wireless communication.

The processing circuitry 610 controls the general operation of the control unit, e.g., by sending data and control signals to the interface 630 and the storage medium 620, by receiving data and reports from the interface 630, and by retrieving data and instructions from the storage medium 620. Other components, as well as the related functionality, of the control node are omitted in order not to obscure the concepts presented herein.

Figure 7 illustrates a computer readable medium 710 carrying a computer program comprising program code means 720 for performing the methods illustrated in Figure 5, when said program product is run on a computer. The computer readable medium and the code means may together form a computer program product 700.

## Claims

1. A production asset monitoring system, for automatically monitoring current operating states of one or more production assets,
where the production asset monitoring system comprises at least one control unit (130, 160, 170, 230) arranged to associate a respective state machine which each asset in the one or more production assets, where each state machine implements a plurality of operating states, out of which operating states at least one state can be categorized as a productive state and at least one state can be categorized as an unproductive state,
where the production asset monitoring system further comprises a sensor system configured to detect a current operating state for each state machine, and
where the control unit (130, 160, 170, 230) is configured to aggregate the states of a plurality of assets into a report indicative of production asset utilization.

2. The production asset monitoring system according to claim 1, where the control unit (130, 160, 170, 230) is arranged to categorize the operating state of at least one state machine as productive or as unproductive based on the current operating state of at least one other state machine.

3. The production asset monitoring system according to claim 1 or 2, where the control unit (130, 160, 170, 230) is configured to generate the report indicative of production asset utilization based at least in part on the categorization of the operating states of the state machines over a time period.

4. The production asset monitoring system according to any previous claim, where a transition between two states (S1, S2, S3) of a first state machine (410) in the production asset monitoring system is conditioned on a current state (X1, X2) of an associated second state machine (420).

5. The production asset monitoring system according to any previous claim, where the current operating state of at least one of the state machines is determined by the control unit (130, 160, 230) in dependence of an operating state of at least one other state machine.

6. The production asset monitoring system according to any previous claim, where the current operating state of at least one of the state machines is categorized as productive or an unproductive by the control unit (130, 160, 230) in dependence of an operating state of at least one other state machine.

7. The production asset monitoring system according to any previous claim, where the control unit (130, 160, 170, 230) is configured to aggregate the states of a plurality of assets into a report indicative of production asset utilization by categorizing the states as productive or an unproductive over time based on a predetermined set of categorization rules.

8. The production asset monitoring system according to any previous claim, where the operating states can be categorized as productive state, unproductive state, and set-up state.

9. The production asset monitoring system according to any previous claim, where an operating state categorized as productive is also associated with a degree of productivity.

10. The production asset monitoring system according to any previous claim, where the control unit (130, 160, 230) is arranged to control at least one production asset based on the report indicative of production asset utilization.

11. The production asset monitoring system according to any previous claim, where the control unit (130, 160, 230) is arranged to determine a resource allocation parameter associated with the one or more production assets based on the report indicative of production asset utilization.

12. A computer implemented method executed in a production asset monitoring system, for monitoring current operating states of one or more production assets, the method comprising:
associating (S1) a respective state machine which each asset in the one or more production assets, where each state machine implements a plurality of operating states, out of which operating states at least one state can be categorized as a productive state and at least one state can be categorized as an unproductive state,
detecting (S2) a current operating state for each state machine based on output data from a sensor system configured to detect the current operating state for each state machine, and
aggregating (S3) the states of a plurality of assets into a report indicative of production asset utilization.

13. A computer program (720) comprising program code means for performing the steps of claim 12 when said program is run on a computer or on processing circuitry (610) of a control unit (130, 160, 230).

14. A remote server (160) comprising processing circuitry (610) arranged to execute the method according to claim 12

15. A wireless device (170) comprising processing circuitry (610) arranged to execute the method according to claim 12.

## Patentansprüche

1. Produktionsanlagenüberwachungssystem zur automatischen Überwachung aktueller Betriebszustände einer oder mehrerer Produktionsanlagen,
wobei das Produktionsanlagenüberwachungssystem mindestens eine Steuereinheit (130, 160, 170, 230) umfasst, die dazu eingerichtet ist, eine jeweilige Zustandsmaschine mit jeder Anlage der einen oder der mehreren Produktionsanlagen zu verknüpfen, wobei jede Zustandsmaschine eine Vielzahl von Betriebszuständen implementiert, wobei von diesen Betriebszuständen mindestens ein Zustand als ein produktiver Zustand kategorisiert werden kann und mindestens ein Zustand als ein unproduktiver Zustand kategorisiert werden kann,
wobei das Produktionsanlagenüberwachungssystem ferner ein Sensorsystem umfasst, das dazu konfiguriert ist, einen aktuellen Betriebszustand für jede Zustandsmaschine zu erkennen und
wobei die Steuereinheit (130, 160, 170, 230) dazu konfiguriert ist, die Zustände einer Vielzahl von Anlagen in einem Bericht zusammenzufassen, der die Auslastung der Produktionsanlagen angibt.

2. Produktionsanlagenüberwachungssystem nach Anspruch 1, wobei die Steuereinheit (130, 160, 170, 230) dazu eingerichtet ist, den Betriebszustand mindestens einer Zustandsmaschine als produktiv oder als unproduktiv basierend auf dem aktuellen Betriebszustand der mindestens einen anderen Zustandsmaschine zu kategorisieren.

3. Produktionsanlagenüberwachungssystem nach Anspruch 1 oder 2, wobei die Steuereinheit (130, 160, 170, 230) dazu konfiguriert ist, den Bericht zu erzeugen, der die Auslastung der Produktionsanlagen angibt, basierend zumindest teilweise auf der Kategorisierung der Betriebszustände der Zustandsmaschinen über einen Zeitraum hinweg.

4. Produktionsanlagenüberwachungssystem nach einem der vorherigen Ansprüche, wobei ein Übergang zwischen zwei Zuständen (S1, S2, S3) einer ersten Zustandsmaschine (410) in dem Produktionsanlagenüberwachungssystem von einem aktuellen Zustand (X1, X2) einer verknüpften zweiten Zustandsmaschine (420) abhängig ist.

5. Produktionsanlagenüberwachungssystem nach einem der vorhergehenden Ansprüche, wobei der aktuelle Betriebszustand mindestens einer der Zustandsmaschinen durch die Steuereinheit (130, 160, 230) in Abhängigkeit von einem Betriebszustand mindestens einer anderen Zustandsmaschine bestimmt wird.

6. Produktionsanlagenüberwachungssystem nach einem der vorhergehenden Ansprüche, wobei der aktuelle Betriebszustand mindestens einer der Zustandsmaschinen durch die Steuereinheit (130, 160, 230) in Abhängigkeit von einem Betriebszustand mindestens einer anderen Zustandsmaschine als produktiv oder als unproduktiv bestimmt wird.

7. Produktionsanlagenüberwachungssystem nach einem der vorhergehenden Ansprüche, wobei die Steuereinheit (130, 160, 170, 230) dazu konfiguriert ist, die Zustände einer Vielzahl von Anlagen in einem Bericht zusammenzufassen, der die Auslastung der Produktionsanlagen angibt, indem die Zustände über eine Zeit hinweg basierend auf einem vorbestimmten Satz von Kategorisierungsregeln als produktiv oder als unproduktiv kategorisiert werden.

8. Produktionsanlagenüberwachungssystem nach einem der vorhergehenden Ansprüche, wobei die Betriebszustände als produktiver Zustand, unproduktiver Zustand und Einrichtungszustand kategorisiert werden können.

9. Produktionsanlagenüberwachungssystem nach einem der vorhergehenden Ansprüche, wobei ein Betriebszustand, der als produktiv kategorisiert ist, auch mit einem Produktivitätsgrad verknüpft ist.

10. Produktionsanlagenüberwachungssystem nach einem der vorhergehenden Ansprüche, wobei die Steuereinheit (130, 160, 230) dazu eingerichtet ist, mindestens eine Produktionsanlage basierend auf dem Bericht, der die Auslastung der Produktionsanlagen angibt, zu steuern.

11. Produktionsanlagenüberwachungssystem nach einem der vorhergehenden Ansprüche, wobei die Steuereinheit (130, 160, 230) dazu eingerichtet ist, einen Ressourcenzuweisungsparameter, der mit der einen oder den mehreren Produktionsanlagen verknüpft ist, basierend auf dem Bericht, der die Auslastung der Produktionsanlagen angibt, zu bestimmen.

12. Computerimplementiertes Verfahren, das in einem Produktionsanlagenüberwachungssystem zur Überwachung aktueller Betriebszustände einer oder mehrerer Produktionsanlagen ausgeführt wird, wobei das Verfahren Folgendes umfasst:
Verknüpfen (S1) einer jeweiligen Zustandsmaschine mit jeder Anlage der einen oder der mehreren Produktionsanlagen, wobei jede Zustandsmaschine eine Vielzahl von Betriebszuständen implementiert, wobei von diesen Betriebszuständen mindestens ein Zustand als ein produktiver Zustand kategorisiert werden kann und mindestens ein Zustand als ein unproduktiver Zustand kategorisiert werden kann,
Erkennen (S2) eines aktuellen Betriebszustands für jede Zustandsmaschine basierend auf Ausgabedaten von einem Sensorsystem, das dazu konfiguriert ist, den aktuellen Betriebszustand für jede Zustandsmaschine zu erkennen, und
Zusammenfassen (S3) der Zustände einer Vielzahl von Anlagen in einem Bericht, der die Auslastung der Produktionsanlagen angibt.

13. Computerprogramm (720), umfassend Programmcodemittel zum Durchführen der Schritte nach Anspruch 12, wenn das Programm auf einem Computer oder auf einer Verarbeitungsschaltung (610) einer Steuereinheit (130, 160, 230) läuft.

14. Remote-Server (160), umfassend eine Verarbeitungsschaltung (610), die dazu eingerichtet ist, das Verfahren nach Anspruch 12 auszuführen

15. Drahtlose Vorrichtung (170), umfassend eine Verarbeitungsschaltung (610), die dazu eingerichtet ist, das Verfahren nach Anspruch 12 auszuführen.

## Revendications

1. Système de surveillance d'actifs de production, permettant de surveiller automatiquement les états de fonctionnement actuels d'un ou plusieurs actifs de production, le système de surveillance d'actifs de production comprenant au moins une unité de commande (130, 160, 170, 230) agencée pour associer une machine d'état respective à chaque actif dans les un ou plusieurs actifs de production, chaque machine d'état implémentant une pluralité d'états de fonctionnement, parmi lesquels états de fonctionnement au moins un état peut être catégorisé comme un état productif et au moins un état peut être catégorisé comme un état improductif,
le système de surveillance d'actifs de production comprenant en outre un système de capteurs configuré pour détecter un état de fonctionnement actuel pour chaque machine d'état, et l'unité de commande (130, 160, 170, 230) étant configurée pour agréger les états d'une pluralité d'actifs dans un rapport indiquant l'utilisation des actifs de production.

2. Système de surveillance d'actifs de production selon la revendication 1, dans lequel l'unité de commande (130, 160, 170, 230) est agencée pour catégoriser l'état de fonctionnement d'au moins une machine d'état comme productif ou comme improductif sur la base de l'état de fonctionnement actuel d'au moins une autre machine d'état.

3. Système de surveillance d'actifs de production selon la revendication 1 ou 2, dans lequel l'unité de commande (130, 160, 170, 230) est configurée pour générer le rapport indicatif de l'utilisation des actifs de production sur la base au moins en partie de la catégorisation des états de fonctionnement des machines d'état sur une période de temps.

4. Système de surveillance d'actifs de production selon l'une quelconque des revendications précédentes, dans lequel une transition entre deux états (S1, S2, S3) d'une première machine d'état (410) dans le système de surveillance d'actifs de production est conditionnée par un état actuel (X1, X2) d'une seconde machine d'état associée (420).

5. Système de surveillance d'actifs de production selon l'une quelconque des revendications précédentes, dans lequel l'état de fonctionnement actuel d'au moins une des machines d'état est déterminé par l'unité de commande (130, 160, 230) en fonction d'un état de fonctionnement d'au moins une autre machine d'état.

6. Système de surveillance d'actifs de production selon l'une quelconque des revendications précédentes, dans lequel l'état de fonctionnement actuel d'au moins une des machines d'état est catégorisé comme productif ou improductif par l'unité de commande (130, 160, 230) en fonction d'un état de fonctionnement d'au moins une autre machine d'état.

7. Système de surveillance d'actifs de production selon l'une quelconque des revendications précédentes, dans lequel l'unité de commande (130, 160, 170, 230) est configurée pour regrouper les états d'une pluralité d'actifs dans un rapport indiquant l'utilisation des actifs de production en catégorisant les états comme productifs ou improductifs au fil du temps sur la base d'un ensemble prédéterminé de règles de catégorisation.

8. Système de surveillance d'actifs de production selon l'une quelconque des revendications précédentes, dans lequel les états de fonctionnement peuvent être classés comme état productif, état improductif et état de configuration.

9. Système de surveillance d'actifs de production selon l'une quelconque des revendications précédentes, dans lequel un état de fonctionnement catégorisé comme productif est également associé à un degré de productivité.

10. Système de surveillance d'actifs de production selon l'une quelconque des revendications précédentes, dans lequel l'unité de commande (130, 160, 230) est conçue pour commander au moins un actif de production sur la base du rapport indiquant l'utilisation d'actifs de production.

11. Système de surveillance d'actifs de production selon l'une quelconque des revendications précédentes, dans lequel l'unité de commande (130, 160, 230) est agencée pour déterminer un paramètre d'allocation de ressources associé aux un ou plusieurs actifs de production sur la base du rapport indicatif de l'utilisation d'actifs de production.

12. Procédé mis en œuvre par ordinateur exécuté dans un système de surveillance d'actifs de production, pour surveiller les états de fonctionnement actuels d'un ou plusieurs actifs de production, le procédé comprenant :
l'association (S1) d'une machine d'état respective à chaque actif dans un ou plusieurs actifs de production, où chaque machine d'état implémente une pluralité d'états de fonctionnement, parmi lesquels états de fonctionnement au moins un état peut être catégorisé comme un état productif et
au moins un état peut être catégorisé comme un état improductif,
la détection (S2) d'un état de fonctionnement actuel pour chaque machine d'état sur la base de données de sortie d'un système de capteurs configuré pour détecter l'état de fonctionnement actuel de chaque machine d'état, et
l'agrégation (S3) des états d'une pluralité d'actifs dans un rapport indicatif de l'utilisation d'actifs de production.

13. Programme informatique (720) comprenant des moyens de code de programme pour exécuter les étapes de la revendication 12 lorsque ledit programme est exécuté sur un ordinateur ou sur un circuit de traitement (610) d'une unité de commande (130, 160, 230).

14. Serveur distant (160) comprenant un circuit de traitement (610) agencé pour exécuter le procédé selon la revendication 12

15. Dispositif sans fil (170) comprenant un circuit de traitement (610) agencé pour exécuter le procédé selon la revendication 12.
